(19) **Europäisches Patentamt / European Patent Office / Office européen des brevets**

(11) **EP 2 786 175 B1**

(12) # EUROPEAN PATENT SPECIFICATION

(45) Date of publication and mention
of the grant of the patent:
**27.07.2016 Bulletin 2016/30**

(51) Int Cl.:
*G01S 17/95* (2006.01)   *G01S 17/58* (2006.01)
*G01S 7/48* (2006.01)   *G01S 7/497* (2006.01)

(21) Application number: **11797304.0**

(22) Date of filing: **29.11.2011**

(86) International application number:
**PCT/EP2011/071311**

(87) International publication number:
**WO 2013/079099 (06.06.2013 Gazette 2013/23)**

(54) **MOTION-STABILISED LIDAR AND METHOD FOR WIND SPEED MEASUREMENT**

BEWEGUNGSSTABILISIERTER LIDAR UND VERFAHREN ZUR WINDGESCHWINDIGKEITSMESSUNG

LIDAR À MOUVEMENT STABILISÉ ET PROCÉDÉ DE MESURE DE VITESSE DU VENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**08.10.2014 Bulletin 2014/41**

(73) Proprietor: **AXYS Technologies**
**8400 Oostende (BE)**

(72) Inventors:
• **DUFFEY, Thomas**
  **B-1030 Schaerbeek (BE)**
• **KYRIAZIS, Anthanazios, Stefanos**
  **B-1060 Saint-Gilles (BE)**
• **DEVRIENDT, Dirk**
  **B-2812 Muizen (BE)**

• **COPPYE, Werner**
  **B-1370 Jodoigne (BE)**

(74) Representative: **Gyi, Jeffrey Ivan et al**
**De Clercq & Partners**
**Edgard Gevaertdreef 10 a**
**9830 Sint-Martens-Latem (BE)**

(56) References cited:
**WO-A2-2009/025911    US-A- 5 796 471**

• **CARTER D ET AL: "First Test of a Shipboard Wind Profiler", BULLETIN OF THE METEOROLOGICAL SOCIETY, AMERICAN METEOROLOGICAL SOCIETY, BOSTON, MA, US, vol. 73, no. 10, 1 October 1992 (1992-10-01), pages 1587-1592, XP007920951, ISSN: 0003-0007**

**Description**

**FIELD OF THE INVENTION**

This invention concerns a motion-stabilised Light Detection And Ranging (LIDAR) for wind speed measurement, and a method for wind speed measurements using the LIDAR system. More particularly, the invention relates to a motion-stabilised LIDAR (LIDAR) and method for use on floating platforms such as buoys.

**BACKGROUND TO THE INVENTION**

Selecting suitable sites for wind turbine placement is important to ensure the energy generated by wind turbines is sufficient to offset the relatively high construction costs, particularly when the turbine is located off-shore. Recording off-shore data has been achieved in the art using mast mounted mechanical or sonic anemometers, using gyro-stabilised radar *(e.g.* Carter D et al, "First Test of a Shipboard Wind Profiler", Bulletin of the Meteorological Society, Vol. 73, No, 10, 1992, p1587-1592) and buoy-mounted LIDARs. Off-shore LIDAR systems are known, for example, from WO 2005/008284 and WO 2009/025911. In particular, WO2009/025911 discloses an apparatus for the measurement of wind speed comprising a LIDAR and a motion detector. LIDAR systems provide wind speed data by measuring the Doppler shift imparted to laser light that is scattered from natural aerosols (e. g. dust, pollen, water droplets etc.) present in air as explained, for instance, in US 5 796 471. An example of a $CO_2$ laser based LIDAR system is described by Vaughan and Forrester in Wind Engineering, Vol 13, No 1, 1989, ppl-15; in particular section 8. More recently, lower cost optical fibre based LIDAR devices of the type described in Karlsson et al, Applied Optics, Vol. 39, No. 21,20 July 2000 have been developed.

LIDAR systems measure the Doppler shift imparted to reflected radiation within a certain remote probe volume and can thus only acquire wind speed data in a direction parallel to the transmitted/returned laser beam. A problem in the art is how to obtain more accurate measurements. Transportable LIDAR systems can be subject to movements that lead to distortions in readings. Off-shore LIDARs, for example, may rely partly on the natural motion of the waves to obtain a measurement volume, however, this volume can be enlarged during certain weather conditions which decreases the accuracy of the measurement. Another problem is the movement of the LIDAR itself can contribute to a false reading. Moreover, erratic motions of the floating LIDAR can lead to further inaccuracies, and may fail to scan a volume sufficiently completely. A problem in the art is how to accurately measure wind speed still accounting for the any movement in the lidar itself.

**SUMMARY OF SOME EMBODIMENTS OF THE INVENTION**

The present invention is defined in embodiments according to claims 1 to 12.

A motion-stabilised LIDAR (100), MS-LIDAR, is described herein for measurement of wind speed, comprising:

- a stabiliser unit (25) having a having a probe end (30) for attachment to a laser radar, LIDAR (10), and a base end (40) for attachment to a buoyant platform (80), which stabiliser unit (25) is configured for at least partial isolation of motions of the base end (40) from the probe end (30);
- a LIDAR (10), attached in fixed relation to the probe end (30);
- a motion detector in fixed relation to the probe end (30);

which MS-LIDAR (100) is arranged to make wind speed measurements at one or more remote probe volumes and which is further provided with a processor (60) configured to calculate wind speed at the one more remote probe volumes and the position of the probe volume relative to a fixed point in space using data obtained from the motion detector (50) and configured to calculate wind speed measurements using a correction method applied to data obtained from the LIDAR (10) and motion detector (50).

The stabiliser unit (25) may be arranged to at least partially isolate one or more of pitch, roll and yaw motions of the base end (40) from the probe end (30).

The motion detector (50) may be arranged to measure one or more of pitch, roll and yaw motions of the probe end (30).

The remote probe volumes may be at an unknown position relative to the base end (40).

The LIDAR (10) may be a pulse wave LIDAR and optionally a scanning LIDAR.

The stabiliser unit (25) may comprise a gimbal mechanism.

The correction method may comprise the steps:

- obtaining from the motion detector (50) information as to the rotational and optionally translational movement of the probe end (30),
- calculating at regular intervals, a transformation matrix from the motion detector information to calculate the position of the probe end (30), wherein the interval is determined by a maximum angular rotational movement of the probe end (30),
- obtaining a movement trajectory of the probe end (30) from the transformation matrix,
- correcting wind speed measurements obtained by the LIDAR for the movement trajectory of the probe end (30).

The transformation matrix may be calculated at regular intervals such that the maximum angular rotational movement detected at the probe end (30) by the motion detector does not exceed 1 degree in any one of roll, pitch or yaw, or wherein the transformation matrix is calculated 2 to 9 times per second.

The correction method may comprise the step:

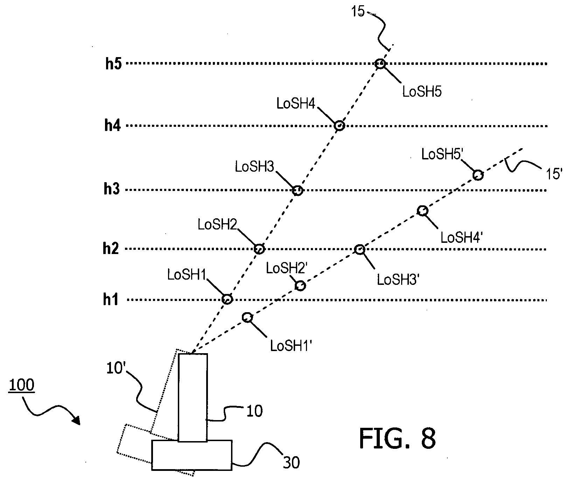

- obtaining wind speed measurements for a plurality of line of sight measurements (15, 15' - FIG. 8), wherein a line of sight measurement comprises a plurality of remote probe volumes at different measurement heights (LoSH1', LoSH2', LoSH3', LoSH4', LoSH5') along the line of sight, in which wind speed is measured,
- generating by interpolation, wind speed data between two or more of said remote probe volumes for the line of sight measurement (15'),
- calculating from the interpolated wind speed data and data from the motion detector (50), the wind speed as a function of atmospheric height for at least two of the plurality of line of sight measurements (15, 15')

The processor may be further configured to calculate a wind speed vector in three-dimensional Cartesian co-ordinates using at least three different line of sight beam directions

The MS-LIDAR (100) may be attached to a buoyant platform (80).

The invention also concerns a method for the measurement of wind speed, comprising use of an MS-LIDAR (100) or MS-LIDAR system (200) as defined herein.


## FIGURES

FIG. 1 shows a drawing of a motion-stabilised LIDAR (MS-LIDAR) of the present invention, whereby the base end and probe end are aligned

FIGs. 1a and 1b shows a drawing of an MS-LIDAR of the present invention, whereby the probe end maintains a vertical alignment isolated from the motions of the base end

FIG. 2 shows a schematic drawing of an MS-LIDAR provided with a processor and data transfer system.

FIG. 3 shows an example of an MS-LIDAR of the invention where the stabiliser unit comprises a gimbal mechanism having a pair of gimbals in which the axes of rotation are orthogonal.

FIG. 4 shows an example of an MS-LIDAR system of the present invention.

FIG. 5 is a schematic illustration of some of the processing steps for acquiring wind speed along a line of sight.

FIG. 6a shows a schematic representation of an MS-LIDAR that is static with respect of translational movement.

FIG. 6b shows a schematic representation of an MS-LIDAR undergoing translational movement.

FIG. 7 shows roll, pitch and yaw movements of the probe end and LIDAR of an MS-LIDAR.

FIG. 8 is a schematic illustration of the effect of LIDAR orientation motion upon the atmospheric measurement height.


## DETAILED DESCRIPTION OF THE INVENTION

Before the present system and method of the invention are described, it is to be understood that this invention is not limited to particular devices, systems and methods or combinations described, since such devices, systems and methods and combinations may, of course, vary. It is also to be understood that the terminology used herein is not intended to be limiting, since the scope of the present invention will be limited only by the appended claims.

As used herein, the singular forms "a", "an", and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements or method steps. It will be appreciated that the terms "comprising", "comprises" and "comprised of" as used herein comprise the terms "consisting of', "consists" and "consists of'.

The recitation of numerical ranges by endpoints includes all numbers and fractions subsumed within the respective ranges, as well as the recited endpoints.

The term "about" or "approximately" as used herein when referring to a measurable value such as a parameter, an amount, a temporal duration, and the like, is meant to encompass variations of +/-10% or less, preferably +/-5% or less, more preferably +/-1% or less, and still more preferably +/-0.1% or less of and from the specified value, insofar such variations are appropriate to perform in the disclosed invention. It is to be understood that the value to which the modifier "about" or "approximately" refers is itself also specifically, and preferably, disclosed.

Whereas the terms "one or more" or "at least one", such as one or more or at least one member(s) of a group of members, is clear *per se,* by means of further exemplification, the term encompasses inter alia a reference to any one of said members, or to any two or more of said members, such as, e.g., any ≥3, ≥4, ≥5, ≥6 or ≥7 etc. of said members, and up to all said members.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

In the following passages, different aspects of the invention are defined in more detail. Each aspect so defined may be combined with any other aspect or aspects unless clearly indicated to the contrary. Any feature indicated may be combined with any other feature. In particular, any feature indicated as being preferred or advantageous may be combined with any other feature or features indicated as being preferred or advantageous.

In the present description of the invention, reference is made to the accompanying drawings that form a part hereof, and in which are shown by way of illustration only of specific embodiments in which the invention may be practiced. Parenthesised or emboldened reference numerals affixed to respective elements merely exemplify the elements by way of example, with which it is not intended to limit the respective elements. It is to be understood that other embodiments may be utilised and structural or logical changes may be made without departing from the scope of the present invention. The following detailed description, therefore, is not to be taken in a limiting sense, and the scope of the present invention is defined by the appended claims.

The present invention provides an apparatus that is a motion-stabilised LIDAR (MS-LIDAR). The lidar is arranged to acquire wind speed measurements at one or more remote probe volumes. The remote volumes remain essentially constant with respect to a fixed point in space, for example, with respect to the Earth; for instance a position measured relative to the ground or the sea-bed, or sea surface.

The MS-LIDAR of the invention comprises a stabiliser unit having a base end and a probe end. The base end is configured for attachment to a buoyant platform. The probe end is configured for attachment to the LIDAR. The stabiliser unit at least partly, preferably fully, isolates the motions of base end from motions of the probe end. The stabiliser unit maintains the LIDAR in an essentially vertical position. A stabiliser connects the base end to the probe end and contains a mechanism that at least partly, preferably fully, isolates said movements of base end from said movements of the probe end.

The base end, (also known as a "base", "base part", or "base member") may be configured for permanent or dismountable connection to the buoyant platform. The base end may comprise a base plate. A dismountable connection allows the MS-LIDAR to be removed for servicing and repair and a replacement swapped-in thereby avoiding downtime. The probe end (also known as a "probe attachment part", "probe attachment member") may be configured for permanent or dismountable connection to the LIDAR. The probe end may comprise a cavity or space to receive the LIDAR. A dismountable connection allows the LIDAR to be removed for servicing and repair and a replacement swapped-in thereby avoiding downtime.

The motions isolated by the stabiliser unit and stabiliser therein may be rotational (angular) or translational or both, but are preferably rotational only. Typically at least some, preferably all of the pitch and/or roll motions of the buoyant platform are absorbed by the stabiliser. The yaw (compass bearing) motions may or may not be isolated. In view of the stabiliser unit, the probe volume measured according to the invention is at an unknown position relative to the base end and hence the buoyant platform. Advantageously, the stabiliser unit allows the one or more remote probe volumes to remain essentially constant with respect to a fixed point in space; for example a position measured relative to the ground or the sea-bed. Accordingly, a probe volume that is otherwise extended by the roll and pitch of the buoyant platform is reduced or avoided, so providing a more accurate determination of wind speed and/or velocity.

The stabiliser of the stabilising unit is a mechanism that at least partly, preferably fully isolates the motions of base end from motions of the probe end. The stabiliser may be passive mechanism, such as a universal joint or gimbal mechanism or ball joint arrangement. A gimbal mechanism may comprise a pair of orthogonally arranged gimbals. A passive stabiliser is preferred which does not contribute to the overall power consumption. However, it is also envisaged that an active stabiliser may be employed, for instance based on gyroscopic stabilisation, or on electronic motion sensors in a closed loop feedback with an electromechancial system (servo motors) which actively maintain the probe end at an essentially constant level.

The MS-LIDAR of the invention further comprises a LIDAR instrument, configured to record the wind speed and/or velocity measurements. The LIDAR comprises a laser and light sensor. The LIDAR laser transmits a laser beam along a line of sight (LoS) which is a particular direction of the beam relative to the LIDAR; light scattered by particles in the air are reflected back and detected by a light sensor in the LIDAR. Wind speed measurements are determined by virtue of a Doppler effect created by movement of the light-scattering particles along the LoS. The wind speed returned is in the direction of the LoS. A horizontal component of the measurement - relevant for turbine applications - can be calculated from the returned wind speed using known values of the length of the LoS and the angle of the LoS relative to the horizon.

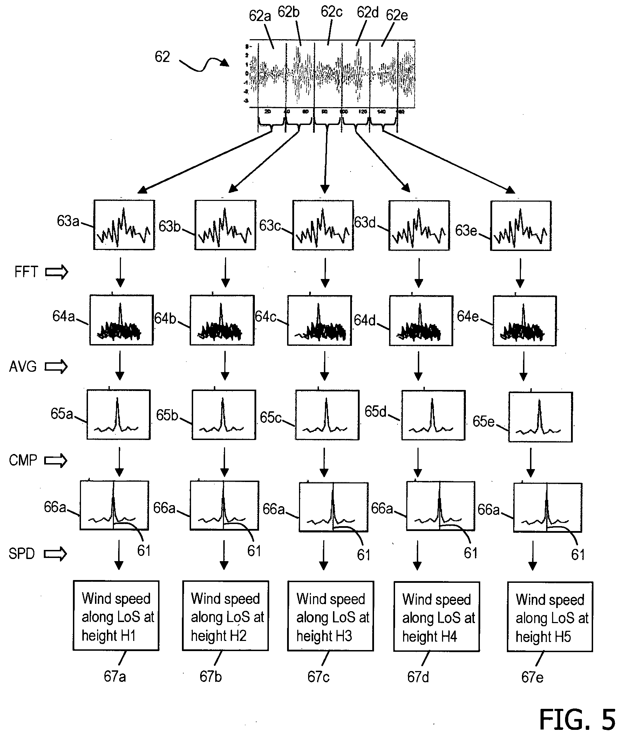

FIG. 5 describes a typical measurement process of a pulse LIDAR in fixed position. Along a single LoS, a plurality of measurements is taken by the LIDAR, which are averaged out to reduce noise. Typically, around 10 000 short pulses are transmitted along a LoS. The length of the pulse partly determines the height of the measurement; a longer pulse corresponds to a greater height. The length of the pulse may be 0.8 microseconds, for example. Each of return signals attributable to a pulse and detected by sensor contains Doppler-modified frequencies through a plurality of planes tangential the LoS. Each return signal 62, in the time domain is converted to the frequency domain using a Fast Fourier Transform (FFT). In order to obtain wind speed information at a particular height, the return signal **62** may be divided into a plurality of windows **62a/63a, 62b/63b, 62c/63c, 62d/63d, 62e/63e** known as a range gates. The signal of one or more, preferably all the range gates **63a, 63b, 63c, 63d, 63e** is FFTd **(FFT)** into the frequency domain, thereby obtaining a plurality of frequency peaks **64a, 64b, 64c, 64d, 64e,** each pertaining to a light frequency and intensity at a different measurement height along the LoS. The signals are averaged **(AVG)** either before or after FFT to obtain a plurality of peaks having improved signal to noise ratio **65a, 65b, 65c, 65d, 65e.** The one or more of the height-relevant signals in the frequency domain is compared **(CMP) 66a, 66b, 66c, 66d, 66e** with the frequency of transmitted light **61;** an indication of a difference between the two allows the calculation **(SPD)** of wind speed along the LoS **67a, 67b, 67c, 67d, 67e,** in the illustration, at heights **H1** to **H5.** Using known values of the measurement height along the LoS and the angle of the LoS relative to the horizon, the atmospheric height of the measurement can be determined. A horizontal component of the measurement may also be calculated using known values of the length of the LoS and the angle of the LoS relative to the horizon.

Advantageously, the MS-LIDAR may be arranged to acquire wind speed measurements from remote probe volumes at a plurality of positions such that a true wind velocity vector can be determined. For example, the LIDAR in the MS-LIDAR may conveniently comprise a beam scanner. In this way, a plurality of remote probe volumes of known position relative to the probe-end of the MS-LIDAR can be provided. The inclusion of a beam scanner is advantageous, but not essential. The beam scanner may advantageously be arranged to cause the laser beam to scan in different directions. The directions may constitute a pattern (e.g. cone). Preferably, the scanning comprises separate beam measurements at 3 or more, preferably 4 different directions around a conical air volume. The cone angle is preferably 28 deg. The measurement so made are sometimes known as radial wind speed measurements. By performing a patterned scan of different directions, wind speed measurements can be intersected at a range of angles enabling the true velocity vector to be deduced for a region in space. Other scanning patterns besides conical are known and can be used to determine the true wind velocity vector, provided that the LIDAR range and pointing (or look) direction is always known with a sufficient degree of accuracy. According to one aspect of the invention, the movement of the probe-end alone, not fully compensated by the stabiliser unit, (e.g. the roll and pitch caused by wave motion), may provide a passive beam scanner that has lower power consumption.

Advantageously, the LIDAR may be bistatic. Bistatic LIDAR systems have separate transmit and receive optics. Monostatic LIDAR systems are also known and are so called because they have common transmit and receive optics. The non-parallel transmit and receive beams of a bistatic system are particularly advantageous because they can be arranged to intersect at a certain point thereby accurately defining the remote probe volume (i.e. the area in space from which Doppler wind speed measurements are acquired). Although confinement of the probe volume may lead to a reduction in the strength of the returned signal for distributed targets, the noise generated by spurious reflections is greatly reduced compared with monostatic systems.

Preferably, the LIDAR is optical fibre based. For example, the LIDAR may be of the type described by Karlsson et al, Applied Optics, Vol. 39, No. 21,20 July 2000. Fibre based LIDAR systems are advantageous compared with $CO_2$ laser based systems because of their small size, low power consumption and robustness.

The LIDAR may be a pulse wave or continuous wave LIDAR. Preferably it is a pulse wave LIDAR.

Advantageously, the MS-LIDAR further comprises a motion detector configured to monitor the motion of the probe end, and hence of the LIDAR, and of the remote probe volumes. The motion detector thus allows an orientation and/or absolute position of the remote probe volume of the LIDAR to be determined for each of the wind speed measurements. From that, a trajectory of motion can be determined. Herein, the term absolute position is a position in space that is defined relative to a fixed point in space (for example on Earth); for example a position measured relative to the ground or the sea-bed. It is understood that the accuracy with which the relative position of the remote probe volume is translated into an absolute remote probe volume position would depend on the accuracy of the motion detector. Typically, the accuracy of the motion detector is around one degree in angle and a few centimetres per second in velocity (in any direction). The motion detector is preferably mounted in fixed relation to the probe end of the MS-LIDAR.

The present invention thus provides an MS-LIDAR that can give reliable data on the wind speed at absolute positions in space. Advantageously, wind speed measurements acquired from remote probe volumes at a plurality of absolute positions allow a true wind speed and/or velocity vector to be determined in a given region of space (e.g. at the potential location of a wind turbine).

Advantageously, the motion detector monitors probe end and hence LIDAR velocity, independent of motions of the base end such that acquired wind velocity measurements for the one or more remote probe volumes can be corrected for any minor probe end velocities.

The motion detector may comprise one or more of a number of motion sensors. The type of motion sensors used in the motion detector would depend on the type of motion adopted by the probe end and hence the connected LIDAR, and the importance of the effect of this motion on the data being acquired. The combination of motion sensors enables the orientation and/or position of the LIDAR probe volume to be determined for each measurement. The motion detector may be activated when measurements are being recorded. It is understood that the motion detector may be provided as a single housed unit, or may be house in multiple units, for example, one unit for each sensor.

Conveniently, the motion detector may comprise a yaw (rotation) sensor. In other words, the compass direction (*i.e.* the bearing in which the apparatus is pointing) is measured. This allows the compass bearing of the probe end and hence of the LIDAR to be determined and thus the wind direction to be calculated. The yaw sensor is preferably mounted in fixed relation to the probe end of the MS-LIDAR. A yaw sensor may be based on a compass sensor.

The motion detector may conveniently comprise a roll sensor and/or pitch (rotation) sensor. For example a two dimensional pitch and roll sensor may be provided. When both roll and pitch are measured, the sensor is sometime known as as inclination sensor. This allows the inclination of the probe end and hence of the LIDAR to be determined and hence the wind direction to be calculated. The roll sensor and/or pitch sensor are preferably mounted in fixed relation to the probe end of the MS-LIDAR. A roll and/ or pitch sensor may be based on a gyroscopic sensor.

Advantageously, the motion detector may comprise a heave sensor. This sensor is used to determine the vertical velocity of the measurement platform and hence allows any change in vertical position of the MS-LIDAR to be established. The measured vertical velocity component may also be used to correct the vertical component of the measured wind speed. The heave sensor may be attached in fixed relation to the MS-LIDAR probe end or base end. A heave may be based on an accelerometer and/or gyroscopic sensor.

The motion detector may also advantageously comprise a translation (sway and/or surge) sensor. This sensor is used to determine the horizontal velocity of the measurement platform (in two dimensions) allowing the MS-LIDAR position to be determined. It preferably detects speed in a given direction. The measured horizontal velocity may also be used to correct the horizontal component of measured wind speed. The translation sensor may be attached in fixed relation to the MS-LIDAR probe end or base end. A sway or surge sensor may be based on an accelerometer and/or gyroscopic sensor.

A global positioning system (GPS) may also be provided to monitor the absolute position of the MS-LIDAR. A translation sensor would generally be unnecessary if the MS-LIDAR was constrained to remain within a defined area. For example, if the platform to which the MS-LIDAR was attached was a tethered buoy. However, approximate positional information as provided by current low-cost GPS systems would be enable the location of a drifting platform to be monitored (e. g. for oceanographic studies) or simply to guard against mooring failure or theft. The GPS may be attached in fixed relation to the MS-LIDAR probe end or base end.

According to a particular aspect of the invention, the motion detector comprise a gyro-enhanced Attitude and Heading Reference System (AHRS). Such AHRS is known in the art, for instance, the MTi as manufactured by Xsens. The AHRS preferably contains an internal low-power signal processor that provides drift-free three-dimensional orientation as well as calibrated three-dimensional acceleration, three-dimensional rate of turn (rate gyro) and three-dimensional earth-magnetic field data. It preferably comprises one or more, preferably all of the following: one or more three-dimensional acceleration sensors (*i.e.* 3 sensors in a three-dimensional orientation), one or more three-dimensional gyro sensors, one or more three-dimensional magnetic sensors, one or more temperature sensor, one or more static pressure sensor, one or more GPS receivers. The processor may employ one or more embedded algorithms and filters for calibration, error correction and aggregation to useful data. The configuration of how the different sensors are incorporated in the calculations can be adapted to the circumstances in which the AHRS is used.

It would be appreciated by a skilled person that a single or multiple sensors could be provided to perform all or a combination of the sensor functions described above. For example, a single absolute positioning and orientation sensor could be used for measurement of rotation, roll, heave and position if sufficiently accurate and affordable.

Calculation of wind speed may rely on some assumptions, including horizontal homogeneity (assumption for averaging beams), a constant speed in interbeam distance for measurement, and spatial variation within a beam measurement volume. In practice, however, there may be movement by the LIDAR, for example, due to translations and angular motions at sea which can be additive to the Doppler effect used to measure wind speed which can distort a wind speed reading. The movement may not necessarily be dampened by the stabiliser. Additionally or alternatively, different atmospheric measurement heights due to movements by the LIDAR leads to a distortion of readings, in particular for calculation of wind speed vectors. Consequently, there is a need to correct wind speed measurements for motion by the LIDAR, and additionally or alternatively for different atmospheric measurement heights.

The present invention thus provides a method of correcting the acquired wind speed measurements to take into account any movements of the probe end and hence LIDAR as measured by the motion detector. In particular, the speed of the moving probe end and hence LIDAR may be subtracted from the wind speed reading. The method may alternatively or additionally correct for differences in atmospheric measurement height between measurements using interpolation.

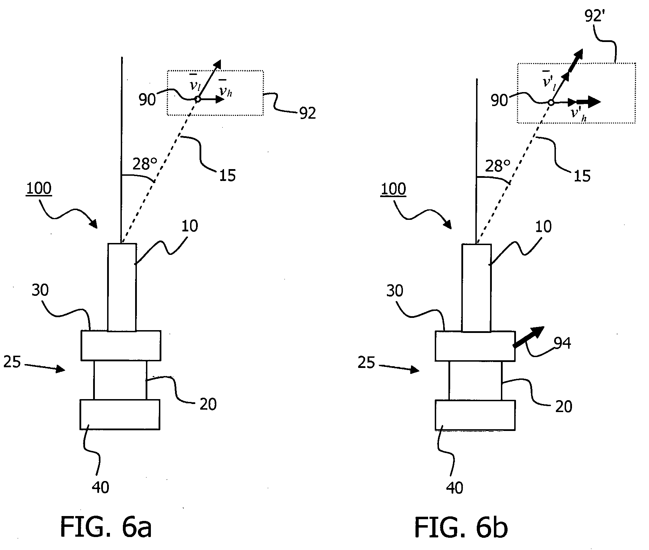

The effect of LIDAR motion on wind speed measurement is described further in detail in as following. While the instant MS-LIDAR is motion stabilised, there may be small movements of the probe end where the base end is under motion. These may be small angular movements and/or translations which may not be stabilised by the stabiliser. Probe end motions are transmitted to the LIDAR and impact the measurement process resulting in a measurement of a combined wind speed composed of the speed of the LIDAR beam at a certain height and the real wind speed along the line of sight. To illustrate better the phenomenon, the following simplified example is provided in **FIGs. 6a** and **6b** which considers a translation movement by the probe end **30. FIGs. 6a** and **6b,** show an MS-LIDAR **100** of the present invention comprising a stabiliser unit **25** having a probe end **30,** a base end **40** and a stabiliser **20** connecting the base end **40** to the probe end **30.** A LIDAR **10** is mounted on the probe end **30.** In **FIGs. 6a** and **6b,** the stabilising unit **25** maintains an essentially vertical position of the probe end **30** and LIDAR **10** when the base end diverges from a neutral position. In **FIG. 6a,** a volume of air **92** is measured when the probe end **30** is static. The measurements along the LoS of the beam **15** allows calculation of the speed of an airborne particle **90** along the LoS $(\overline{v}_l)$ and the subsequent calculation of the horizontal wind wind speed $(\overline{v}_h)$ with knowledge of the cone angle (28°) and measurement length along the beam. Now consider the probe end **30** at a constant (non-accelerating) horizontal translational motion, as illustrated in **FIG. 6b.** The motion is indicated with arrow **94.** The measurements along the LoS of the beam **15** indicates an effective increase of wind speed measured along the LoS $(\overline{v}_l)$; this would be accompanied by a subsequent increase in the horizontal wind speed $(\overline{v}_h)$ vector; the increases in speed vectors are indicated by the thick black arrows in **FIG. 6b.** The resulting measurement corresponds to a volume of air **96** enlarged by the movement of the probe end **30** and hence LIDAR beam **15;** the resulting wind speed vector amounts to the combination of real wind flow **90** and probe end LIDAR motion **94** at the measurement height. Thus, movement by the probe end distorts the measurement of the real wind flow **90.**

While the illustration above is described in terms of translational motions by the probe end, it is well understood that distortions in measurement may also arise from angular motions by the probe end.

Consequently, the correction method of the present invention compensates for translational and/or angular motions of the probe end in calculating the real wind speed, in particular of a vector component such as the horizontal component or a 3D Cartesian wind speed vector. In other words, data received from the motion detector may be used by a computer-implemented correction method to compensate wind speed measurements. Specifically, translational movements by the probe end in 1-, or 2-, or 3-dimensions may be subtracted from the measured wind speed to compute the real wind speed.

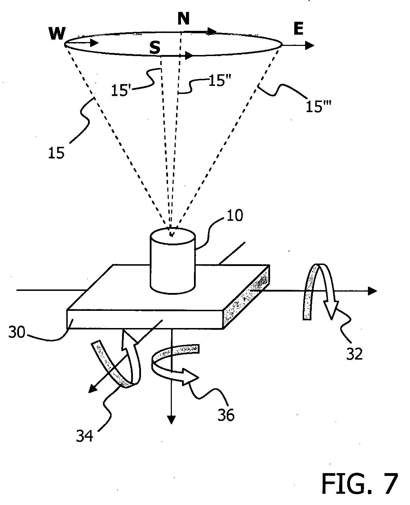

Using inputs from the motion detector and using kinematic equations, the correction method may construct a transformation matrix, where for a given position of the probe end, the position of measurement (3D positioning) in a fixed coordinate system can be determined. The total transformation matrix is dependent on geometry of the LIDAR which may have one or more fixed components such as cone angle and sensor position. The matrix may have one or more variables including rotations and measurement height. The position of the measurement may be determined in space, preferably in a fixed co-ordinate system. An illustration of a coordinate system is presented in **FIG. 7,** where the measurement coordinate system of the motion detector is presented which is located within the probe end **30,** and shown are axes around which roll **32,** pitch **34** and yaw **36** motions may arise. Also indicated are four separate radial line-of-sight beam positions **15, 15', 15'', 15'''** at West **(W),** South **(S),** North **(N)** and East **(E)** respectively, each used to determine a separate wind speed measurement.

A generalisation of a typical transformation matrix formation is presented in **Eq 1,** where ${}^A_B R$ is the rotation matrix of co-ordinate system B referenced to A, ${}^B_C R$ is the rotation matrix of co-ordinate system C referenced to B. The matrices are multiplied ${}^A_B R * {}^B_C R$ to obtain a relationship of C referenced to A. ${}^A P$ and ${}^B P$ are a translations which are vectors x, y, z that relate to the origins of the coordinate systems to the reference system.

$$
{}_{C}^{A}T = \begin{bmatrix} {}_{B}^{A}R\,{}_{C}^{B}R & \vdots & {}_{B}^{A}R\,{}^{B}P_{CORG} + {}^{A}P_{BORG} \\ \cdots & \vdots & \cdots \\ 0 \quad 0 \quad 0 & \vdots & 1 \end{bmatrix}
$$

**[Eq. 1]**

The top left part of the matrix represents the rotations in a 3D coordinate reference system. The coordinate system is preferably the co-ordinate system of the motion detector. The top right part of the matrix represents a translation part. The translation may be attributable to a vertical translation (e.g. a heave at sea) which would affect the target measurement height. The lower part of the matrix represents scale and zoom (lower left and right respectively). The scale and zoom may not necessary be used.

In order to account for the rotations of the probe end or lidar in the measurement process, the following separate transformation matrices (T1 to T3) may be constructed:

T1 : Probe end or lidar rotation with respect to the motion detector co-ordinate system
T2: Probe end or lidar translation, particularly in respect of measurement height,
T3: Rotation of measurements at measurement height dependent on the probe end or lidar rotation position

The final transformation matrix may be obtained by the sequence of transformation matrix multiplication in **Eq. 2**:

Tfinal = T3 * T2 * T1     **[Eq. 2]**

The final matrix may be resolved, depending on the motion or motions which require correction. Resolving **Eq. 2,** for example, with respect to lidar motion for the North beam **(FIG. 7),** the measurement height change with respect to motion of the probe end or lidar for a North beam amounts to Hb1 in **Eq. 3.**

Hb1 = cos(b)*cos(fba)*cos(g)*l-sin(fba)*(sin(a)*sin(g)-cos(a)*sin(b)*cos(g))*l     **[Eq. 3]**

where:

**fba** is the cone-angle (fixed at 28°),
**a, b, g** are the yaw, pitch and roll angle inputs from the motion sensor,
l the targeted measurement height

In application of the correction method, the order in which rotations and, to a lesser extent, translations detected by the motion detector are applied to the starting probe end position by the transformation matrix is important *i.e.* rotation transformations are non-commutative. For small rotation angles, rotation sequence is of limited importance; for higher rotation angles the sequence of rotations become more important. Consequently, the correction method calculates a transformation matrix when each of the rotations (roll, pitch, yaw) is small in angle. Small rotation angles may be regarded as equal to or less than 1.0, 0.9, 0.8, 0.7, 0.6, 0.5, 0.4, 0.3, 0.2, or 0.1 degrees; in other words, these would be a maximum angular rotational movement of the probe end (30). The transformation matrix is recalculated based upon updated angles detected by the motion detector, reflecting a new LIDAR orientation.

By recalculating the matrix at high regularity, small changes in angles are inherently provided. Thus, alternatively or additionally, the transformation matrix may be computed at high regularity; this does not allow sufficient time for a large rotation angle to evolve. By computing the transformation matrix a high regularity, it is meant that the matrix is recalculated at a rate equal to or greater than 0.2, 0.4, 0.5, 0.6, 0.8, 1, 2, 3, 4, 5, 6, 7, 8, 9, 10, 11, 12, 13, 14, 15, 16, 17 18, 19 or 20 times per second, or a value in the range between any two of the aforementioned values. Preferably, the transformation matrix is recalculated at a rate equal to or greater than 2 times per second, preferably 2 to 9 times per second. A maximum angular rotational movement and/or a minimum computation rate may be set.

Advantageously, the use of small rotation angles and/or high recalculation regularity combined with the transformation matrix allows a reduction in sampling time. Using the present invention, a high measurement quality is obtained with less pulses compared with the prior art e.g. 2000 pulses using the present invention which provides a reading every 0.2 seconds. The reduction in pulses leads to a reduction in power consumption. Alternatively, it may provide data at a high resolution owing to the possibility for obtaining more samples in the same time frame.

Thus, according to one aspect of the invention, wherein the correction method may comprise the steps:

- obtaining from the motion detector (50) information as to the rotational and optionally translational movement of the probe end (30),
- calculating at regular intervals, a transformation matrix from the motion detector information to calculate the position of the probe end (30); the interval may be determined by a maximum angular rotational movement of the probe end (30),
- obtaining a movement trajectory of the probe end (30) from the transformation matrix, and
- correcting wind speed measurements obtained by the LIDAR for the movement trajectory of the probe end (30).

The transformation matrix may be calculated based on new angles such that the maximum angular rotational movement detected at the probe end (30) by the motion detector does not exceed 1 degree in any one of roll, pitch or yaw, or the transformation matrix may be recalculated 2 to 9 times per second.

The result of the transformations is a trajectory of motion. The trajectory of motion provides the coordinates of the trajectory of the probe end in a fixed co-ordinate system (e.g. relative to the motion detector). It may also provide the speed of the motion along the trajectory; this is useful for correction of the measured wind speed and calculated vectors by subtraction or addition. It may also provide the acceleration of the motion along the trajectory; this would be useful for obtaining a weighted wind speed average.

Motions by the LIDAR between beam measurements, whether taken in the same LoS beam direction (e.g. N in FIG. 7), or at a different LoS beam direction (e.g. N, S, E, W in FIG. 7) may lead to distortions to the values of the wind speed returned. For instance, a change in angular position of the LIDAR between consecutive measurements at the same LoS direction (e.g. between several N readings) or between consecutive measurements at different LoS directions (e.g. between N and S readings), would cause measurement of wind speed at a different height in the atmosphere; data from the motion detector may be used to adapt the measurement to the specified atmospheric height, taking into account that the measurements are taken at different heights.

This is illustrated in **FIG. 8.** A typical LIDAR wind speed measurement along a LoS **15, 15'** comprises a plurality of wind speed measurements at different height measurements along the LoS (LoS heights) which LoS heights generally remain fixed for each and every reading. In present specification LoS height or LoS measurement height refers to the distance along the LIDAR beam, from the LIDAR to the position in atmosphere at which the wind speed measurement is taken. The atmospheric height refers to the essentially vertical distance from the position in atmosphere at which the wind speed measurement is taken to an imaginary horizontal plane essentially level with the LIDAR.

In **FIG. 8,** the LIDAR in a first orientation (solid line LIDAR **10**) takes wind speed measurements at five discrete probe volumes along a LoS **15** corresponding to five different LoS heights **LoSH1, LoSH2, LoSH3, LoSH4, LoSH5**. These intersect with atmospheric heights **h1, h2, h3, h4** and **h5** at which the wind speed is desired. When the LIDAR adopts a different (second) orientation as shown in **FIG. 8** (dotted line LIDAR **10'),** the five LoS heights **LoSH1', LoSH2', LoSH3', LoSH4', LoSH5**' intersect different atmospheric heights compared with the first orientation, and so would return wind speed measurements for different atmospheric layers. It is an aspect of the invention that wind speed measurement at a plurality of LoS heights for a LoS reading are interpolated i.e. wind speed data points are generated between real LoS height measurements. The result is wind speed data for a height-graduated LoS. Height-graduated LoS refers to LoS measurement heights having one or more interpolated data points; it may have a regular spacing between points. In the case of **FIG. 8** for the LIDAR in the second orientation, wind speed and LoS height data between **LoSH1'** and **LoSH2'** may be generated, for instance; this would enable calculation of wind speed at atmospheric height **h1** even though the acquired data would not enable a direct calculation thereof. Accordingly, wind speed data for a LoS measurement across a range of LoS heights is generated, from which the wind speed at a given atmospheric height can be determined from the interpolated height data and using data from the motion detector. The result is wind speed data for a graduated atmospheric height; it may have a regular spacing between points. A graduated atmospheric height refers to atmospheric measurement heights having one or more interpolated data points Correction by interpolation allows a more accurate calculation of the wind speed at one or a plurality of atmospheric heights.

Techniques for interpolation are known in the art, for instance linear interpolation. The linear interpolation may be combined with curve fitting techniques, for instance, those which use a first degree polyonium in the form of y= a* x + b where , y stands for response, x stands for the independent variable and a , b are the slope and intercept of the line.

Consequently, according to one aspect, the correction method of the invention may comprise the steps:

- obtaining wind speed measurements for a plurality of line of sight measurements **15,15',** wherein a (single) line of sight measurement comprises a plurality of remote probe volumes disposed at different measurement heights **LoSH1', LoSH2', LoSH3', LoSH4', LoSH5'** along the line of sight, in which wind speed is measured,

- generating by interpolation, wind speed data between two or more of said remote probe volumes at different LoS measurement heights e.g. **LoSH1', LoSH2'** for a line of sight measurement **15'**; the result is height-graduated wind speed data for the line of sight measurement **15'**; the two or more of said remote probe volumes are preferably adjacent along the LoS; data is preferably interpolated between all the probe volumes of the LoS;

- calculating from the interpolated from the wind speed data and data from the motion detector (50), the wind speed as a function of atmospheric height for at least two of the plurality of LoS measurements **15, 15'**.

Where insufficient return signal is available, for example, because the height of the measurement is insufficient, then data obtained from another LoS direction may be used, corrected for orientation.

It may be a further desirable to transform a plurality of LoS LIDAR data measurements taken at different directions into Cartesian measurements *i.e.* u, v, w components of wind speed at a particular atmospheric height. This may be achieved through the combination of different beam measurements taken at different directions across the measurement cone, as shown for instance in **FIG. 7 (15, 15', 15'', 15''')**. It is noted the present specification refers to a LoS direction as meaning an angular position of the LIDAR beam as set by the LIDAR, for example, using an internal mirror; the direction relative to a fixed point in space can be altered, however, as a result of movements by the LIDAR. The technique of transformation is known in the art, for example, from http://mst.nerc.ac.uk/v3_signal_processing_overview.html (Deriving Cartesian Wind Components) and the mathematical equations are presented in http://mst.nerc.ac.uk/dbs_wind_deriv.html which are incorporated herein by reference.

To derive a measurement of wind speed, typically at least 2 radial components i.e. 2 beam measurements at different directions are needed. In order to arrive at a final 3D Cartesian vector for wind speed, at minimum, measurements at 3 different LoS beam directions are needed. Preferably, 4 different beam directions are recorded. Preferably, the directions are spatially radial. Equations which may be used in extracting Cartesian measurements from radial LoS measurements are described below. Where, for example, the LIDAR probes the atmosphere at four different directions, East, West, North and South, the system of wind equations may be described be according to **Eq. 4:**

$$
\begin{aligned}
Vr_N &= u\,sin\theta + w\,cos\theta \\
Vr_E &= v\,sin\theta + w\,cos\theta \\
Vr_S &= -u\,sin\theta + w\,cos\theta \\
Vr_W &= -v\,sin\theta + w\,cos\theta
\end{aligned}
$$

**[Eq. 4]**

where Vr is a LIDAR LoS wind speed along directions East (E), West (W), North (N) and South (S), θ is the cone angle, and u, v, w are the wind speed in Cartesian co-ordinates. The retrieved wind speed components, assuming they are the same at the four directions may be derived according to Eq. 5:

$$
\begin{aligned}
u &= \frac{Vr_N - Vr_S}{2sin\theta} \\
v &= \frac{Vr_E - Vr_W}{2sin\theta} \\
w &= \frac{Vr_N + Vr_E + Vr_S + Vr_W}{4cos\theta}
\end{aligned}
$$

**[Eq. 5]**

Following **Eq. 5,** and taking into account that each beam measurement is recorded at different time intervals, there is a co-dependency in calculating Cartesian vectors both in terms of space (different beam directions) and in time (combination of measurements from different beam directions that are taken in different time intervals).

As mentioned earlier, motions by the LIDAR between beam measurements (*e.g.* N, S, E, W directions) used to calculate the Cartesian vectors may lead to distortions of the Cartesian vector values returned. These may be corrected owing to data of the motion detector in the probe end. A change in height or orientation of the LIDAR between consecutive measurements at the same LoS direction (*e.g.* between several N readings), would cause measurement of wind speed at a different atmospheric height; data from the motion detector is used to adapt the measurement to the specified atmospheric height, taking into account that the measurements are taken at different heights as described above. Where insufficient return signal is available, for example, because the height of the measurement is insufficient, then data obtained from another LoS direction may be used, corrected for orientation.

The wind speed at each of the different LoS directions (*e.g.* N, E, S, W) is typically measured by the LIDAR sequentially and not simultaneously. It is an aspect of the invention that a measurement at a particular LoS direction is repeated more than once. The repeat measurement may be made after the other directions have been measured. In other words, the LIDAR may measure sequentially a plurality of directions, and repeat the sequential measurement of a plurality of directions a number of times (e.g. N, E, S, W, N, E, S, W, N, E, S, W, etc) to improve the signal to noise ratio.

It is noted that the aforementioned correction to the wind speed by interpolation and/or the correction applied for Doppler shift due to LIDAR movement may be applied in the calculation of 3D Cartesian co-ordinates of wind speed.

The MS-LIDAR of the present invention further comprises a processor, receiving the outputs of the motion detector and of the LIDAR. It is configured to calculate the position relative to a fixed position in space of the remote probe volume of each wind speed measurement, in addition to the wind speed at that volume. The processor may calculate a 3D Cartesian vector for wind speed as described above.

In addition, the processor may advantageously be arranged to compensate for LIDAR movements in calculating wind speed. The processor is configured to calculate wind speed measurements using a correction applied to data obtained from the LIDAR and motion detector. Specifically, motions of the LIDAR which combine with the real wind speed to give an apparent wind speed, as described above, may be subtracted by the processor. Specifically, motions of the LIDAR between a plurality of readings which affect the atmospheric measurement height as described above, may be corrected by the processor. Specifically, motions of the LIDAR between a plurality of readings used to determine the wind speed vector may be corrected by the processor.

Preferably, a data storage device is also included. The processor and data storage device may be provided by a computing device, preferably a low energy consumption portable computing device such as a smart phone, laptop computer, netbook computer, tablet computer or the like. Collected data may be stored locally on a storage medium (e.g. hard drive, flash card, SD card) for subsequent collection by a service engineer.

Advantageously, the processor comprises a computer readable medium comprising a computer program comprising instructions for performing a method of correction as described elsewhere herein. Advantageously, the processor comprises a computer readable medium comprising a computer program comprising instructions for performing a method of correcting the acquired wind speed measurements to take into account any movements of the probe end and hence LIDAR as measured by the motion detector. The method of correcting the acquired wind speed measurements may comprise one or more of the elements described above.

A data transfer system (*e.g.* transmitter, receiver or transceiver) may also be provided with the MS-LIDAR. The acquired data may be periodically transmitted to a remote system *via* known communication device; e.g. cellular telephone, satellite telephone, satcoms, short wave radio or meteorburst. If more detailed data is required then higher bandwidth communication systems may alternatively be employed. Very detailed information may not be transmitted but stored locally on the storage medium (*e.g.* hard drive, flash card, SD card) for subsequent collection by a service engineer.

The invention further provides an MS-LIDAR system comprising the MS-LIDAR mounted on a support. The support may be transportable such as a buoyant platform (*i.e.* a platform that will float on water), a truck, a car, a lorry, a quad bike etc. The present invention thus provides a LIDAR system that can be quickly and easily deployed at any desired location on water or land, and can provide reliable wind speed measurements. In particular, the LIDAR system may be readily deployed off-shore.

Advantageously, the MS-LIDAR of the MS-LIDAR system is mounted within the buoyant platform. A transparent window may be provided within the platform through which the laser can be directed and return signals passed. Alternatively, the MS-LIDAR may be attached to an external portion of the platform. Advantageously, the MS-LIDAR is arranged to have a substantially vertical look direction.

The buoyant platform (which may also be termed a floating platform) conveniently comprises a buoy. The term buoy is well known to those skilled in the art as meaning an unmanned and autonomous buoyant platform. The buoy may be tethered in position or may drift with the tide. A buoy of the present invention may be used off-shore in the ocean/sea or may be used in inland expanses of water such as lakes, rivers etc. The buoyant platform may alternatively comprise any platform that is arranged to float on water; for example, a vessel such as a boat, ship, etc.

Means may also be provided to clean the output port through which the radiation generated by the MS-LIDAR is emitted and returning signal pass. For example, a wiper or a wash-wipe system may be provided.

Measurements made using the MS-LIDAR system include one or more of air temperature, air pressure, water temperature, differential temperature, wave height, wave period, wave direction, water level, current velocity, and current direction, higher-frequency wind velocity data, components of turbulence intensity.

According to a second aspect of the invention, a method of determining wind velocity in the vicinity of a buoyant platform is provided and is characterised by the steps of (i) providing an MS-LIDAR or MS-LIDAR system as described herein and (ii) using the LIDAR to acquire wind velocity measurements from one or more remote probe volumes.

Conveniently, the method further comprises the step of (iii) using a motion detector to measure motion of the probe end and hence of the LIDAR. This enables the absolute position of the probe volume wind velocity measurement to be determined.

Conveniently, the method also comprises the additional step of (iv) acquiring wind velocity measurements from a plurality of probe volumes of known position relative to a position in space that is defined relative to a fixed point relative in space (on Earth); for example a position measured relative to the ground or the sea-bed.

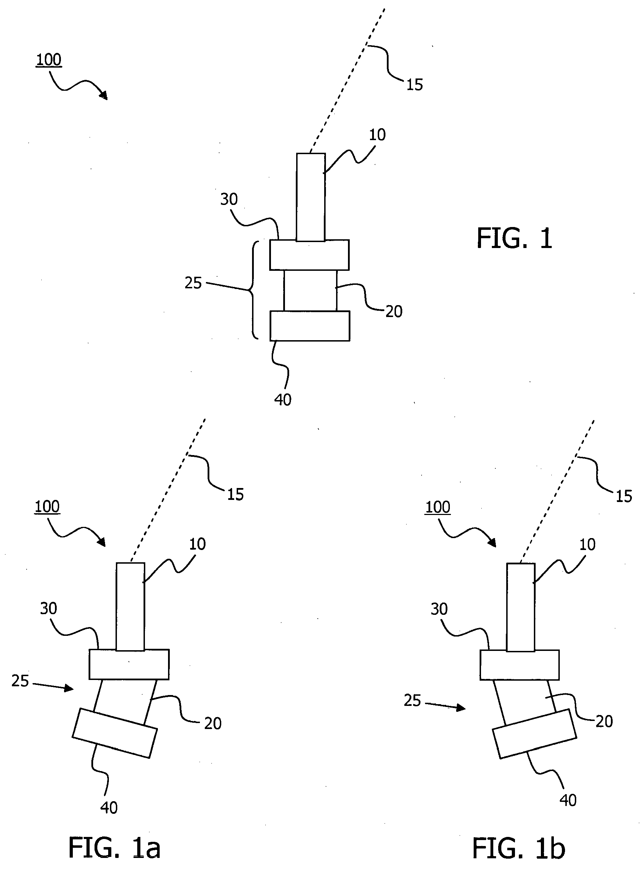

Referring to **FIG. 1,** an MS-LIDAR **100** of the present invention is shown. The MS-LIDAR **100** comprises a stabiliser unit **25** having a probe end **30,** a base end **40** and a stabiliser **20** connecting the base end **40** to the probe end **30.** A LIDAR **10** is mounted on the probe end **30.** In **FIGs. 1a** and **1b,** the stabilising unit **25** maintains an essentially vertical position of the probe end **30** and LIDAR **10** when the base end diverges from a neutral position.

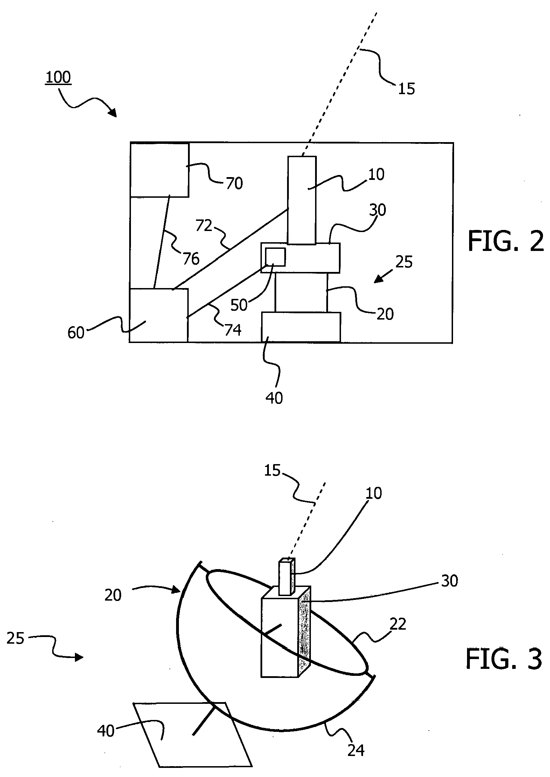

FIG. 2 illustrates another example of a MS-LIDAR of **FIG. 1,** further comprising motion detector **50,** a processor **60** and a data transfer system **70.** The motion detector **50** is attached to the probe end **30.** The LIDAR **10** motion detector **50,** and data transfer system **70** are in data communication **72, 74, 76** (respectively) with the processor **60.**The MS-LIDAR **100** has a fixed range and emits and receives laser radiation (as indicated by the beam **15)** in a known direction relative to the probe end **30;** *i.e.* the probe volume of the device relative to the probe end **30** of the MS-LIDAR **100** is known.

Although a fixed range LIDAR is described, a LIDAR system may also be used which incorporates a means by which the range (e.g. height) of the measurement probe may be varied to enable wind fields to be interrogated at varying heights. This may be accomplished, for example by varying the position of intercept in a bi-static system, by varying the focus in a monostatic system, or by employing a range-gated pulsed LIDAR system.

The LIDAR may incorporate a scanner, that can scan the beam **15** in pattern (*e.g.* conical path) relative to the probe end **30** resulting in a scanning LIDAR The scanner may comprise a typical prior art optical scanning system. For example, depending upon the area to be scanned, a raster or vector scan using angled mirrors driven by powerful motors may be utlised. Alternatively, or in addition, natural wave motion may be utilised to provide a pseudo-random scanning pattern. When a mechanical scanning is employed, the scanner may comprise a single mirror or an optical prism rotated about a single axis. This would cause the laser beam to scan in a conical fashion and such an approach would ensure that wind data could be recorded even under extreme calm conditions.

Any motion of the probe end **30** and hence LIDAR **10** would affect the position of the probe volume in which wind speed measurements are made. In the case of a buoy mounted wind measurement system, the rotation (*i. e.* compass direction) and pitch and roll (i.e. inclination) of the buoy would affect the probe sample position, despite the angular stabilisation. If a LIDAR system is used that has a fixed range, the heave (*i.e.* vertical displacement) would alter the absolute height at which measurements are made and can thus be considered to affect the accuracy of the wind velocity data calculated for a region in space. Furthermore, it noted that the vertical velocity of the LIDAR **10** may affect the Doppler shift that is measured from a probe volume in a given region of space. However, the instantaneous velocity of LIDAR **10** motion can be measured and used to correct the velocity measured for a given probe volume.

Rotation, roll and heave can be monitored using several established motion sensing techniques such as magnetic compasses, gyroscopes and accelerometers. Translation of MS-LIDAR **100** may be relatively small and may not significantly affect probe position, but instantaneous MS-LIDAR **100** velocity may be compensated for to provide accurate horizontal wind speed measurements. However, for a drifting buoy as used in meteorological or oceanographic studies, some form of positioning system would be necessary. For example, a Global Positioning System (GPS) could be used.

The data from each orientation sensor (e.g. rotation, roll, heave and translation) forming the motion detector **50** are communicated to the processor **60** along with a wind speed signal from the LIDAR **10.** The computer then calculates the wind speed at various probe volumes and determines a three-dimensional wind vector. The aforementioned correction method is preferably applied to the data. The computer may be configured to average data over periods of many minutes.

Alternatively, it can be arranged to acquire detailed information about the structure of the wind on a time scale of tens of milliseconds.

The acquired data (averaged or detailed) may be stored by the computer **60,** for example on a hard disk drive. It may be periodically downloaded to a remote system via a transmission component of the data transfer system **70.** A receiver component of the data transfer system may also be provided for receiving control commands to alter the type of data being acquired. Alternatively, the data may be continually transmitted to a remote system and the integral computer **60** may be low complexity or substituted by a dedicated processor.

If time averaged data is output by the system, the data transfer system **70** may comprise an existing commercial communications systems, *e.g.* GSM, satcoms, SW radio or meteorburst. However, if more detailed data is also required then higher bandwidth communication systems may need to be employed, but these too are readily available, although they may consume more electrical power.

At present, a fibre-based MS-LIDAR system would be expected to require about two hundred Watts of power. This, plus that required for the motion detector, navigation lights, communications and, possibly, a heater might increase the power budget to perhaps four hundred Watts. For an autonomous buoy-mounted LIDAR this power might need to be generated semi- continuously. Various options exist for generating the power required; for example solar, wave, wind, diesel/gas, fuel cells or batteries etc. A combination of such energy sources could also be used to provide continuous operation.

The MS-LIDAR system may be provided with a cleaning system (not shown) for the external optics, such as a lens or window. A simple wiper system as used for instance on car headlamps would be adequate for most situations. A refinement might be to include a washer system with incorporating a reservoir of cleaning fluid. Alternatively, a simple transparent foil may be unrolled across the external optic; much like the devices used by motor sports drivers to keep clear visibility in adverse conditions. This approach would assist in reducing the problem of salt build up causing unwanted scattering of the laser beam.

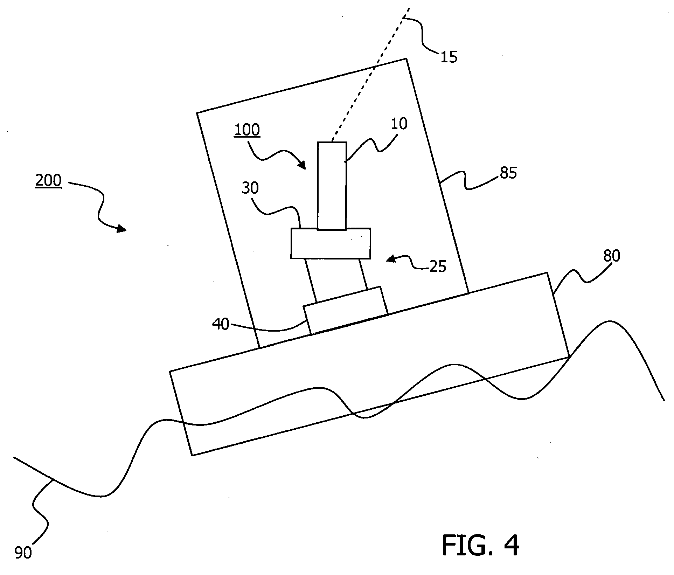

FIG. 3 is a graphic illustration of an MS-LIDAR **100** wherein the stabiliser **20** of the stabiliser unit **25** is comprised in a pair of gimbals **22, 24** having orthogonal axes of rotation. The outer gimbal **24** forms part of the base end **40,** while the inner gimbal **22** forms part of the probe end **22.** FIG. 4 is a graphic illustration of an MS-LIDAR **100** attached to a buoyant platform, in this case a buoy **80** off-shore, so constituting an MS-LIDAR system **200.** The MS-LIDAR is covered with a protective cover **85,** and the MS-LIDAR system is afloat at sea 90.

Numerous alternative uses for the wind speed measurement apparatus of the present invention would be apparent to a person skilled in the art.

## Claims

1. An apparatus (100), for measurement of wind speed, comprising:

   - a stabiliser unit (25) having a having a probe end (30) for attachment to a laser radar, LIDAR (10), and a base end (40) for attachment to a buoyant platform (80), which stabiliser unit (25) is configured for at least partial isolation of motions of the base end (40) from the probe end (30) using a passive mechanism;
   - a LIDAR (10), attached in fixed relation to the probe end (30);
   - a motion detector (50) in fixed relation to the probe end (30);
   - a processor (60) configured to calculate wind speed at one or more remote probe volumes and the position of the probe volume relative to a fixed point in space using data obtained from the motion detector (50) and configured to calculate wind speed measurements using a correction method applied to data obtained from the LIDAR (10) and from the motion detector (50);

   which apparatus (100) is arranged to make wind speed measurements at one or more remote probe volumes.

2. The apparatus (100) according to claim 1, wherein the stabiliser unit (25) is arranged to at least partially isolate one or more of pitch, roll and yaw motions of the base end (40) from the probe end (30).

3. The apparatus (100) according to claim 1 or 2, wherein the motion detector (50) is arranged to measure one or more of pitch, roll and yaw motions of the probe end (30).

4. The apparatus (100) according to any of claims 1 to 3, wherein the remote probe volumes are at an unknown position relative to the base end (40).

5. The apparatus (100) according to any of claims 1 to 4, wherein the LIDAR (10) is a pulse wave LIDAR and optionally a scanning LIDAR.

6. The apparatus (100) according to any of claims 1 to 5, wherein the stabiliser unit (25) comprises a gimbal mechanism.

7. The apparatus (100) according to any of claims 1 to 6, wherein the correction method comprises the steps:

   - obtaining from the motion detector (50) information as to the rotational and optionally translational movement of the probe end (30),
   - calculating at regular intervals, a transformation matrix from the motion detector information to calculate the position of the probe end (30), wherein the interval is determined by a maximum angular rotational movement of the probe end (30),
   - obtaining a movement trajectory of the probe end (30) from the transformation matrix,
   - correcting wind speed measurements obtained by the LIDAR (10) for the movement trajectory of the probe end (30).

8. The apparatus (100) according to claim 7, wherein the transformation matrix is calculated at regular intervals such that the maximum angular rotational movement detected at the probe end (30) by the motion detector (50) does not exceed 1 degree in any one of roll, pitch or yaw, or wherein the transformation matrix is calculated 2 to 9 times per second.

9. The apparatus (100) according to any of claims 1 to 6, wherein the correction method comprises:

- obtaining wind speed measurements for a plurality of line of sight measurements (15, 15' - FIG. 8), wherein a line of sight measurement comprises a plurality of remote probe volumes at different measurement heights (LoSH1', LoSH2', LoSH3', LoSH4', LoSH5') along the line of sight, in which wind speed is measured,
- generating by interpolation, wind speed data between two or more of said remote probe volumes for the line of sight measurement (15'),
- calculating from the interpolated wind speed data and data from the motion detector (50), the wind speed as a function of atmospheric height for at least two of the plurality of line of sight measurements (15, 15').

10. The apparatus (100) according to any of claims 1 to 9 wherein the processor (60) is further configured to calculate a wind speed vector in three-dimensional Cartesian co-ordinates using at least three different line of sight beam directions

11. A system (200) comprising an apparatus (100) as defined in any of claim 1 to 10 attached to a buoyant platform (80).

12. A method for the measurement of wind speed, comprising use of an apparatus (100) or system (200) according to any of claims 1 to 11.


**Patentansprüche**

1. Vorrichtung (100) zum Messen der Windgeschwindigkeit, die aufweist:

- eine Stabilisatoreinheit (25) mit einem Sondenende (30) zur Befestigung an einem Laserradar, LIDAR (10), und mit einem Basisende (40) zur Befestigung an einer schwimmfähigen Plattform (80), wobei die Stabilisatoreinheit (25) für eine zumindest teilweise Isolierung von Bewegungen des Basisendes (40) vom Sondenende (30) unter Verwendung eines passiven Mechanismus konfiguriert ist;
- einen LIDAR (10), der in ortsfester Beziehung zum Sondenende (30) befestigt ist;
- einen Bewegungsdetektor (50) in ortsfester Beziehung zum Sondenende (30);
- einen Prozessor (60), der konfiguriert ist, die Windgeschwindigkeit in einem oder mehreren entfernten Sondenvolumen und die Position des Sondenvolumens bezüglich eines ortsfesten Punkts im Raum unter Verwendung von vom Bewegungsdetektor (50) erhaltenen Daten zu berechnen, und konfiguriert ist, Windgeschwindigkeitsmesswerte unter Verwendung eines Korrekturverfahrens zu berechnen, das an Daten angewendet wird, die vom LIDAR (10) und vom Bewegungsdetektor (50) erhalten werden;

wobei die Vorrichtung (100) eingerichtet ist, Windgeschwindigkeitsmessungen an einem oder mehreren entfernten Sondenvolumen durchzuführen.

2. Vorrichtung (100) nach Anspruch 1, wobei die Stabilisatoreinheit (25) eingerichtet ist, eine oder mehrere der Nick-, Roll- und Gierbewegungen des Basisendes (40) vom Sondenende (30) zu isolieren.

3. Vorrichtung (100) nach Anspruch 1 oder 2, wobei der Bewegungsdetektor (50) eingerichtet ist, eine oder mehrere der Nick-, Roll- und Gierbewegungen des Sondenendes (30) zu messen.

4. Vorrichtung (100) nach einem der Ansprüche 1 bis 3, wobei die entfernten Sondenvolumen sich in einer unbekannten Position bezüglich des Basisendes (40) befinden.

5. Vorrichtung (100) nach einem der Ansprüche 1 bis 4, wobei der LIDAR (10) ein Pulswellen-LIDAR und optional ein scannender LIDAR ist.

6. Vorrichtung (100) nach einem der Ansprüche 1 bis 5, wobei die Stabilisatoreinheit (25) einen Kardanmechanismus aufweist.

7. Vorrichtung (100) nach einem der Ansprüche 1 bis 6, wobei das Korrekturverfahren die folgenden Schritte aufweist:

- Erhalt vom Bewegungsdetektor (50) von Informationen bezüglich der Dreh- und optional Translationsbewegung des Sondenendes (30),
- Berechnen in regelmäßigen Abständen einer Transformationsmatrix aus den Informationen vom Bewegungsdetektor, um die Position des Sondenendes (30) zu berechnen, wobei der Abstand von einer maximalen Winkel-Drehbewegung des Sondenendes (30) bestimmt wird,
- Erhalt einer Bewegungstrajektorie des Sondenendes (30) von der Transformationsmatrix,
- Korrektur der vom LIDAR (10) erhaltenen Windgeschwindigkeitsmesswerte für die Bewegungstrajektorie des Sondenendes (30).

8. Vorrichtung (100) nach Anspruch 7, wobei die Transformationsmatrix in regelmäßigen Abständen so berechnet wird, dass die am Sondenende (30) vom Bewegungsdetektor (50) erfasste maximale Winkel-Drehbewegung 1 Grad beim Rollen, Nicken oder Gieren nicht überschreitet, oder wobei die Transformationsmatrix 2 bis 9 Mal pro Sekunde berechnet wird.

9. Vorrichtung (100) nach einem der Ansprüche 1 bis 6, wobei das Korrekturverfahren aufweist:

- Erhalt von Windgeschwindigkeitsmesswerten für eine Vielzahl von Sichtlinienmessungen (15, 15' - FIG. 8), wobei eine Sichtlinienmessung eine Vielzahl von entfernten Sondenvolumen in verschiedenen Messhöhen (LoSH1', LoSH2', LoSH3', LoSH4', LoSH5') entlang der Sichtlinie enthält, in denen die Windgeschwindigkeit gemessen wird,
- Erzeugung durch Interpolation von Windgeschwindigkeitsdaten zwischen zwei oder mehr der entfernten Sondenvolumen für die Sichtlinienmessung (15'),
- Berechnen von den interpolierten Windgeschwindigkeitsdaten und Daten vom Bewegungsdetektor (50) der Windgeschwindigkeit als eine Funktion der atmosphärischen Höhe für mindestens zwei der Vielzahl von Sichtlinienmessungen (15, 15').

10. Vorrichtung (100) nach einem der Ansprüche 1 bis 9, wobei der Prozessor (60) weiter konfiguriert ist, unter Verwendung von mindestens drei unterschiedlichen Sichtlinienstrahlrichtungen einen Windgeschwindigkeitsvektor in einem dreidimensionalen kartesischen Koordinatensystem zu berechnen.

11. System (200), das eine Vorrichtung (100) wie in einem der Ansprüche 1 bis 10 definiert an einer schwimmfähigen Plattform (80) befestigt enthält.

12. Verfahren zur Messung der Windgeschwindigkeit, das die Verwendung einer Vorrichtung (100) oder eines Systems (200) nach einem der Ansprüche 1 bis 11 aufweist.

**Revendications**

1. Dispositif (100) pour mesurer la vitesse du vent, comprenant :

- une unité de stabilisation (25) ayant une extrémité de sonde (30) pour le rattachement à un radar laser, un LIDAR (10), et une extrémité de base (40) pour le rattachement à une plateforme flottante (80), laquelle unité de stabilisation (25) est configurée pour un isolement au moins partiel des mouvements de l'extrémité de base (40) par rapport à l'extrémité de sonde (30) par utilisation d'un mécanisme passif ;
- un LIDAR (10) attaché en relation fixe à l'extrémité de sonde (30) ;
- un détecteur de mouvement (50) en relation fixe avec l'extrémité de sonde (30) ;
- un processeur (60) configuré pour calculer la vitesse du vent au niveau d'un ou de plusieurs volumes de sonde distants et la position du volume de sonde par rapport à un point fixe dans l'espace en utilisant des données obtenues à partir du détecteur de mouvement (50), et configuré pour calculer des mesures de vitesse du vent en utilisant un procédé de correction appliqué à des données obtenues à partir du LIDAR (10) et à partir du détecteur de mouvement (50);

lequel dispositif (100) est agencé de façon à effectuer des mesures de vitesse du vent au niveau d'un ou de plusieurs volumes de sonde distants.

2. Dispositif (100) selon la revendication 1, dans lequel l'unité de stabilisation (25) est agencée de façon à isoler au moins partiellement un ou plusieurs mouvements parmi un tangage, un roulis et un lacet de l'extrémité de base (40) par rapport à l'extrémité de sonde (30).

3.  Dispositif (100) selon la revendication 1 ou 2, dans lequel le détecteur de mouvement (50) est agencé de façon à mesurer un ou plusieurs mouvements parmi un tangage, un roulis et un lacet de l'extrémité de sonde (30).

4.  Dispositif (100) selon l'une quelconque des revendications 1 à 3, dans lequel les volumes de sonde distants sont à une position inconnue par rapport à l'extrémité de base (40).

5.  Dispositif (100) selon l'une quelconque des revendications 1 à 4, dans lequel le LIDAR (10) est un LIDAR à ondes pulsées et éventuellement un LIDAR à balayage.

6.  Dispositif (100) selon l'une quelconque des revendications 1 à 5, dans lequel l'unité de stabilisation (25) comprend un mécanisme de cardan.

7.  Dispositif (100) selon l'une quelconque des revendications 1 à 6, dans lequel le procédé de correction comprend les étapes suivantes :

    - obtention, à partir du détecteur de mouvement (50), d'une information concernant le mouvement de rotation et éventuellement de translation de l'extrémité de sonde (30),
    - calcul à intervalles réguliers d'une matrice de transformation à partir de l'information du détecteur de mouvement pour calculer la position de l'extrémité de sonde (30), l'intervalle étant déterminé par un mouvement rotationnel angulaire maximal de l'extrémité de sonde (30),
    - obtention d'une trajectoire de mouvement de l'extrémité de sonde (30) à partir de la matrice de transformation,
    - correction des mesures de vitesse du vent obtenues par le LIDAR (10) pour la trajectoire de mouvement de l'extrémité de sonde (30).

8.  Dispositif (100) selon la revendication 7, dans lequel la matrice de transformation est calculée à intervalles réguliers de façon que le mouvement rotationnel angulaire maximal détecté au niveau de l'extrémité de sonde (30) par le détecteur de mouvement (50) ne dépasse pas 1 degré dans l'un quelconque parmi le tangage, le roulis et le lacet, ou dans lequel la matrice de transformation est calculée 2 à 9 fois par seconde.

9.  Dispositif (100) selon l'une quelconque des revendications 1 à 6, dans lequel le procédé de correction comprend :

    - l'obtention de mesures de vitesse du vent pour une pluralité de mesures de ligne de visée (15, 15' - Figure 8), où une mesure de ligne de visée comprend une pluralité de volumes de sonde distants à différentes hauteurs de mesure (LoSH1', LoSH2', LoSH3', LoSH4', LoSH5') le long de la ligne de visée, dans lesquels la vitesse du vent est mesurée,
    - la génération par interpolation de données de vitesse du vent entre deux ou plus de deux desdits volumes de sonde distants pour la mesure de ligne de visée (15'),
    - le calcul, à partir des données de vitesse du vent interpolées et des données provenant du détecteur de mouvement (50), de la vitesse du vent en fonction de la hauteur atmosphérique pour au moins deux parmi la pluralité de mesures de ligne de visée (15, 15').

10. Dispositif (100) selon l'une quelconque des revendications 1 à 9, dans lequel le processeur (60) est en outre configuré pour calculer un vecteur de vitesse du vent en coordonnées cartésiennes tridimensionnelles en utilisant au moins trois directions de faisceau de ligne de visée.

11. Système (200) comprenant un dispositif (100) tel que défini dans l'une quelconque des revendications 1 à 10 rattaché à une plateforme flottante (80).

12. Procédé pour mesurer la vitesse du vent, comprenant l'utilisation d'un dispositif (100) ou système (200) selon l'une quelconque des revendications 1 à 11.

100

15

10

30

FIG. 1

25

20

40

100

15

10

30

25

20

40

FIG. 1a

100

15

10

30

25

20

40

FIG. 1b

FIG. 2

FIG. 3

FIG. 4

FIG. 5

EP 2 786 175 B1

FIG. 6a

FIG. 6b

21

FIG. 7

FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009025911 A

- US 5796471 A

**Non-patent literature cited in the description**

- **CARTER D et al.** First Test of a Shipboard Wind Profiler. *Bulletin of the Meteorological Society,* 1992, vol. 73 (10), 1587-1592

- **VAUGHAN ; FORRESTER.** *Wind Engineering,* 1989, vol. 13 (1), I-15
- **KARLSSON et al.** *Applied Optics,* 20 July 2000, vol. 39 (21